# EUROPÄISCHE PATENTANMELDUNG

(11) **EP 4 417 657 A1**
(43) Veröffentlichungstag der Anmeldung: **21.08.2024**
(21) Anmeldenummer: 23156877.5
(22) Anmeldetag: 15.02.2023
(51) Int. Cl.: C09D 7/61, C09D 7/63, C09D 7/65, C09D 15/00

(54) **ZUSAMMENSETZUNG ZUR VERSIEGELUNG UND BESCHICHTUNG VON KANTEN UND/ODER FASEN VON HOLZWERKSTOFFPLATTEN**

(71) Anmelder: Flooring Technologies Ltd., Kalkara SCM1001 (MT)
(72) Erfinder: Braun, Roger, 6130 Willisau (CH); Gier, Andreas, 66399 Mandelbachtal (DE); Hasch, Joachim, 10317 Berlin (DE); Kalwa, Norbert, 32805 Horn-Bad Meinberg (DE)
(74) Vertreter: Maikowski & Ninnemann Patentanwälte Partnerschaft mbB

(57) **Zusammenfassung**

Die vorliegende Erfindung betrifft eine Zusammensetzung zur Versiegelung und Beschichtung von Kanten und/oder Fasen von Holzwerkstoffplatten umfassend mindestens ein Quellungsmittel, und mindestens ein Additiv aus mindestens einer Verbindung der allgemeinen Formel (I) **R¹ₐSiX¹₍₄₋ₐ₎ (I),** wobei X¹ Alkoxy-, Aryloxy-, Acyloxy- ist, und R¹ ein organischer Rest ist ausgewählt aus der Gruppe umfassend Alkyl, Aryl, Cycloalkyl, die durch -O- oder -NH- unterbrochen sein können, und wobei R¹ mindestens eine funktionelle Gruppe Q₁ aufweist, die ausgewählt ist aus einer Gruppe enthaltend eine Acryl-, Acryloxy-, Methacryl, Methacryloxy-, Cyano-, Isocyano- und Epoxid- Gruppe, und a = 0, 1, 2, 3, insbesondere 0 oder 1 ist, mindestens einer Verbindung der allgemeinen Formel (II) **R²_{b}SiX²_{(4-b)} (II)**, wobei X² Alkoxy-, Aryloxy-, Acyloxy ist, R² ein nicht-hydrolysierbarer organischer Rest R² ist ausgewählt aus der Gruppe umfassend Alkyl und Aryl, und b = 1, 2, 3, oder 4 ist, und mindestens einer wässrigen Polymerdispersion.

## Beschreibung

Die vorliegende Erfindung betrifft eine Zusammensetzung zur Beschichtung und Versiegelung von Kanten und/ oder Fasen von Holzwerkstoffplatten, die Herstellung dieser Zusammensetzung sowie Holzwerkstoffplatten mit dieser Zusammensetzung.

### Beschreibung

Fußbodenpaneele mit Feder-Nut-Profilen an den Seitenkanten zur Verlegung zu Paneelverbünden, wie Laminatfußböden, sind weit verbreitet und herkömmlich bekannt. Die Feder-Nut-Profile ermöglichen eine einfache Verlegung von Fußbodenpaneelen zu Fußbodenbelägen. Solche Fußbodenbeläge können zum Beispiel aus Holzfaserplatten oder Kunststoffplatten bestehen. Meistens sind die Fußbodenpaneele mit einer Dekorschicht und einer abriebfesten Oberflächenschicht versehen.

Derartige Feder-Nut-Profile weisen in einer ersten Seitenkante eine Feder (oder Zunge) mit einer oberhalb der Feder vorgesehenen (ersten) Fügefläche auf und in einer zweiten Seitenkante eine Nut mit einer Lippe mit einer (zweiten) Fügefläche auf. Beim Verlegen der Paneele werden Feder und Nut ineinander gesteckt oder geklickt, so dass es zum Kontakt der ersten und zweiten Fügefläche kommt. Dieser Ansatz bedingt jedoch einen Spalt auf der Oberseite der zusammengefügten Paneele, und hier insbesondere an den Kontaktpunkten der Fügeflächen der beiden sich gegenüberliegenden Seitenkanten von zwei zusammengefügten Fußbodenpaneelen, durch welchen Feuchtigkeit und Schmutz zwischen die Fußbodenpaneele eindringen kann.

Zur Verringerung des Eindringens von Wasser an den Kontaktpunkten der Feder-Nut-Profile weisen moderne Klickprofile zusätzlich im Bereich der Fügekante einen Falz auf. Unter einem Falz ist ein Absatz, eine Kante oder eine Faltung zu verstehen.

Als sehr populär haben sich Laminatböden mit so genannten V-Fugen erwiesen. Diese V-Fugen werden bei der Verlegung von Fußbodenpaneelen mit Fasen gebildet. Bei den Fasen handelt es sich um schräge Abfräsungen an den Seitenkanten der Fußbodenpaneele, die mit farbigen Lacken ablackiert werden und dem Laminatboden einem dem Parkett nachempfundenen visuellen Eindruck geben.

All diese Verbindungsvarianten von Paneelen weisen jedoch nach wie vor einen nur unzureichenden Schutz vor Eindringen von Wasser an der Verbindungs- bzw. Kontaktstelle auf. Dies ist dadurch bedingt, dass bei diesen Produkten durch die feinen Fugen bzw. Spalten zwischen den Fußbodenpaneelen über Kapillarkräfte Wasser (z. B. bei der Reinigung) in den Profilbereich gesaugt wird und dort für Anquellungen sorgt. Zur Prüfung dieses Problems wurde der sogenannte NALFA-Test entwickelt, bei dem eine definierte Menge Wasser im Verbindungsbereich dreier verlegter Dielenabschnitte aufgebracht wird. Nach einer definierten Prüfzeit (24 h) wird analysiert, ob noch Wasser auf der Oberfläche vorhanden ist, Wasser in das Profil eingedrungen ist, durch das Profil auf die Unterseite gelangt ist und, ob eine deutlich sichtbare Quellung der Dielen erkennbar ist.

Zur Minderung von Feuchteschäden werden bisher verschiedene Strategien einzeln oder in Kombination angewendet. Die einfachste Möglichkeit, das Eindringen von Feuchtigkeit in das Profil zu erschweren, besteht darin, eine möglichst stramme Passung in der Nut- und Federverbindung zu erreichen. Dies kann allerdings zu einem erschwerten Zusammenfügen der Elemente oder dem Auftreten von Beschädigungen beim Verlegen führen. Diese Methode hat zudem den Nachteil, dass, wenn Wasser in den Nut- und Federbereich eingedrungen ist, der Holzwerkstoffträger normal quillt.

Eine weitere Möglichkeit ist die Versiegelung des Profils mit Hydrophobierungsmitteln. So wird in der WO 2006/038867 die Verwendung von Wachsen zur Beschichtung der Kanten beschrieben, wobei zumindest ein teilweises Eindringen des Wachses in das Holzwerkstoffmaterial zu beobachten ist. Aus der EP 903451 A2 ist die Verwendung von Diphenylmethandiisocyanat zur Behandlung der Kanten entnehmbar, das leicht in den Holzwerkstoff penetriert. In der WO 2008/078181 A1 wird wiederum ein fluoriertes Polymer, z.B. Perfluoroalkyl-Methacryl-Copolymer als Beschichtungsmittel verwendet, wobei das schichtbildende Material bei Raumtemperatur fest ist.

Der Nachteil dieser bekannten Versiegelungsmittel besteht somit insbesondere darin, dass diese häufig bereits bei der Applikation in den Holzwerkstoffträger wandern und damit der Hydrophobierungseffekt minimiert wird. Dies kann aber auch nachträglich erfolgen, sodass der Effekt in der Nutzung langsam verloren geht. Zudem sind Perfluoro-Verbindungen unter Umweltgesichtspunkten als kritisch einzustufen.

Entsprechend ergeben sich aus den bekannten Maßnahmen verschiedene Nachteile. So ist die Verbesserung des Quellschutzes zu gering, die vorgeschlagenen Maßnahmen können teilweise reale Beanspruchungen nicht standhalten und die bewirkten Effekte sind zeitlich begrenzt.

Der vorliegenden Erfindung lag somit die Aufgabe zugrunde, die angeführten Nachteile zu überwinden. Insbesondere lag der Erfindung die technische Aufgabe zu Grunde, einen Laminatboden zu produzieren, der durch eine Versiegelung des Kanten- und Fasenbereichs eine Dichtigkeit des Profils gegenüber aufliegendem Wasser erzeugt.

Diese Aufgabe wird erfindungsgemäß durch eine Zusammensetzung mit den Merkmalen des Anspruchs 1 gelöst.

Entsprechend wird eine Zusammensetzung zur Versiegelung und Beschichtung von Kanten und/oder Fasen von Holzwerkstoffplatten, insbesondere Fußbodenpaneelen, bereitgestellt, wobei die Zusammensetzung folgendes umfasst:
a) Mindestens ein Quellungsmittel, und
b) Mindestens ein Additiv aus
   - mindestens einer Verbindung der allgemeinen Formel (I)

      **R¹ₐSiX¹₍₄₋ₐ₎** **(I),**

      wobei
   - X¹ Alkoxy-, Aryloxy-, Acyloxy- ist, und
   - R¹ ein organischer Rest ist ausgewählt aus der Gruppe umfassend Alkyl, Aryl, Cycloalkyl, die durch -O- oder -NH- unterbrochen sein können, und
   - wobei R¹ mindestens eine funktionelle Gruppe Q₁ aufweist, die ausgewählt ist aus einer Gruppe enthaltend eine Acryl-, Acryloxy-, Methacryl-, Methacryloxy-, Cyano-, Isocyano- und Epoxid- Gruppe, und
   - a = 0, 1, 2, 3, insbesondere 0 oder 1 ist,
   - mindestens einer Verbindung der allgemeinen Formel (II)

      **R²_{b}SiX²_{(4-b)}** **(II),**

      wobei
   - X² Alkoxy-, Aryloxy-, Acyloxy ist,
   - R² ein nicht-hydrolysierbarer organischer Rest R² ist ausgewählt aus der Gruppe umfassend Alkyl und Aryl, und
   - b = 1, 2, 3, oder 4, bevorzugt 1 oder 2 ist, und
   - mindestens einer wässrigen Polymerdispersion.

Die wasserabweisende Wirkung der vorliegenden Zusammensetzung kann für eine Vielzahl von Verriegelungsprofilen realisiert werden. Die vorliegende Zusammensetzung wird insbesondere auf Profilflächen, Fügeflächen und/oder Fasen von Seitenkanten von Holzwerkstoffplatten, insbesondere von Fußbodenpaneelen, aufgetragen.

Durch die Zugabe eines Quellungsmittels weist die vorliegende Zusammensetzung nicht nur einen wasserabweisenden Effekt auf, sondern bewirkt auch ein Verschließen der Fügekanten von zu einem schwimmend verlegten Bodenbelag zusammengefügten Fußbodenpaneelen. Dadurch wird die Dichtigkeit der Fugen von zusammengefügten Paneelen weiter verbessert.

Das in der vorliegenden Zusammensetzung verwendete Additiv umfasst mit der Verbindung der allgemeinen Formel (I) eine vernetzende Komponente und mit der Verbindung der allgemeinen Formel (II) eine hydrophobe Komponente. Die vernetzende, hydrophile Komponente der Formel (I) ermöglicht zum einen, insbesondere über die (vorhandenen oder sich mittels Hydrolyse von z.B. Alkoxy-Gruppen bildenden) freien -OH Gruppen, eine Anbindung der Verbindung an die Holzfasern und zum anderen die Ausbildung eines Netzwerkes. Die hydrophobe Komponente der Formel (II) - gebildet z.B. aus den Alkylgruppen des Restes R² - bildet eine wasserabweisende Barriere auf. Auf diese Weise kann das Wasser nicht durch das Netzwerk der ausgebildeten Beschichtung diffundieren.

Das in der vorliegenden Zusammensetzung verwendete Additiv ermöglicht ein Auffüllen der in der Holzfaserplatte vorhandenen Poren und ein Umhüllen der Holzfasern, wodurch diese "versiegelt" werden. Andererseits wird durch die Verwendung hydrophober Modifikationen eine "Hydrophobierung" der noch verbleibenden Poren und der noch unbeschichteten Holzfasern aufgebaut.

Um eine möglichst hohe Flexibilität der Beschichtung zu erhalten werden die Silanverbindungen mit einer geeigneten, wässrigen Polymerdispersion vermischt. Die verwendeten Polymere haben funktionelle Gruppen, die mit der anorganischen Silan-Matrix kompatibel sind. Daher gelingt es auch bei geringen Temperaturen, eine Beschichtung mit hohem Vernetzungsgrad herzustellen.

Die vorliegende Zusammensetzung ist für beliebige Plattensysteme und Leimsysteme einsetzbar. So bewirkt die Zusammensetzung eine Quellreduzierung bei Holzfaserplatten unabhängig von den verwendeten Leimsystemen, unterschiedlicher Porosität oder Plattenstärke. So konnte die quellreduzierende Wirkung der vorliegenden Zusammensetzung bei HDF-Platten und Spanplatten mit Harnstoff-Formaldehyd-Leim (UF-Leim), Melamin-Harnstoff-Formaldehyd-Leim (MUF-Leim) oder Polyurethan-basierten-Leim (PMDI-Leim) nachgewiesen werden.

In einer Ausführungsform der vorliegenden Zusammensetzung ist das mindestens eine Quellungsmittel ausgewählt aus einer Gruppe aus quellfähigen natürlichen oder synthetischen Polymeren oder anorganischen Stoffen.

So kann das mindestens eine Quellungsmittel ein quellfähiges Polymer sein ausgewählt aus der Gruppe enthaltend Polysaccharide, bevorzugt Xanthane, Stärke, Cellulose, modifizierte Cellulose, bevorzugt Ethylcellulose, Pektine, Protein, bevorzugt Gelantine.

Xanthan ist ein natürlich vorkommendes Polysaccharid. Es wird mit Hilfe von Bakterien der Gattung *Xanthomonas* aus zuckerhaltigen Substraten gewonnen undals Verdickungs- und Geliermittel u.a. in Lebensmittel eingesetzt wird.

Ethylcellulose ist ein makromolekularer Stoff, der halbsynthetisch aus der natürlich vorkommenden Cellulose gewonnen wird. Chemisch handelt es sich um einen Celluloseether, der in verschiedenen Typen vorkommt, die sich in ihrem Polymerisationsgrad (Molmassenverteilung) und in ihrem Veretherungsgrad unterscheiden.

In einer Ausführungsform ist die verwendete Stärke ausgewählt aus der Gruppe enthaltend Kartoffelstärke, Maisstärke, Weizenstärke oder Reisstärke.

Stärke ist ein Polysaccharid mit der Formel (C₆H₁₀O₅)ₙ, das aus α-D-Glucose-Einheiten besteht. Das Makromolekül zählt daher zu den Kohlenhydraten. Stärke kann unter Hitzeeinwirkung ein Vielfaches ihres Eigengewichtes an Wasser physikalisch binden, aufquellen und verkleistern. Beim Erhitzen mit Wasser quillt die Stärke bei 47-57 °C und bei 55-87 °C (Kartoffelstärke bei 62,5 °C, Weizenstärke bei 67,5 °C) entsteht Stärkekleister, welcher je nach der Stärkesorte verschiedenes Steifungsvermögen besitzt (Maisstärkekleister größeres als Weizenstärkekleister, dieser größeres als Kartoffelstärkekleister) und sich mehr oder weniger leicht unter Säuerung zersetzt.

In einer weiteren Ausführungsform ist das mindestens eine Quellungsmittel ein quellfähiges synthetisches Polymer ausgewählt aus der Gruppe enthaltend Polyacrylate, oder anorganischen Stoffen, wie Schichtsilikate (z.B. Bentonit) oder Silicagel.

In einer besonders bevorzugten Ausführungsform wird als Quellungsmittel ein Copolymer aus Acrylsäure und Acrylat verwendet. Derartige acrylhaltige Absorptionsmittel mit Partikelgrößen zwischen 100-1000 µm sind auch als Superabsorber bekannt, die in der Lage sind, ein Vielfaches ihres Eigengewichtes an polaren Flüssigkeiten wie zum Beispiel Wasser aufzunehmen. Bei Aufnahme der Flüssigkeit quillt der Superabsorber auf und bildet ein Hydrogel. Im vorliegenden Falle besteht das Quellungsmittel in einer besonders bevorzugten Ausführungsform aus einem Copolymer aus Kaliumpolyacrylat und Polyamid.

Besonders bevorzugt zum Einsatz kommende Quellungsmittel sind Ethylcellulose, Polyacrylate und/oder Xanthan.

Der Anteil des mindestens einen Quellungsmittels beträgt zwischen 0,3 - 5 Gew%, bevorzugt 1 - 4 Gew%.bezogen auf das Additiv.

Der Rest X¹ ist vorteilhafter ausgewählt aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, und der Rest X² ist vorteilhafterwiese ausgewählt ist aus einer Gruppe enthaltend H, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,

Der organische Rest R¹ ist bevorzugt ausgewählt aus einer Gruppe umfassend C₁-C₃₀-Alkyl, insbesondere C₅-C₂₅-Alkyl und C₃-C₈-Cycloalkyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, bevorzugt Methyl, Ethyl, Propyl.

In einer Ausführungsform der vorliegenden Zusammensetzung ist die mindestens eine funktionelle Gruppe Q¹ ausgewählt aus einer Gruppe enthaltend Epoxid-, Methacryl-, Methacryloxy-, Vinyl-, Cyano- und/oder Isocyano-Gruppe. Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen der allgemeinen Formel (I) gemäß R¹ₐSiX¹₍₄₋ₐ₎, insbesondere R¹SiX¹₃, mit einer funktionellen Gruppe Q¹ ausgewählt sein aus Methacryloxypropyltrimethoxysilan (MPTS), Silane mit einer Epoxyfunktionalisierung wie Glycidyl-oxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen

Der Begriff "substituiert" bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, wie Pyrrolidinyl, Imidazolyl, Indolyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer besonders bevorzugten Variante der vorliegenden Zusammensetzung entspricht die Verbindung der allgemeinen Formel (I) der Formel **SiX¹₄,** wobei der Rest X¹ Alkoxy, insbesondere Methoxy, Ethoxy, n-Propoxy oder i-Propoxy, ist. Als besonders bevorzugte Vernetzer werden Tetramethoxysilan und Tetraethoxysilan verwendet.

In einer weiteren Ausführungsform der vorliegenden Zusammensetzung ist der nichthydrolisierbare organische Rest R² der Verbindung gemäß der Formel (II) ausgewählt aus einer Gruppe umfassend C₁-C₁₅-Alkyl, insbesondere C₁-C₁₀-Alkyl, und C₆-C₁₀-Aryl. Diese können nicht-substituiert oder mit einer weiteren hydrophoben Gruppe substituiert sein

Es ist bevorzugt, wenn der nicht-hydroliserbare organische Rest R² ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Phenyl und Naphthyl. Besonders bevorzugt sind Methyl, Ethyl, Propyl, Octyl, oder Phenyl-Reste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der Formel (II) kann insbesondere eine der folgenden Formeln umfassen:
- R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Methyltriethoxysilan, Octyltriethoxysilan, Phenyltriethoxysilan.

In einer Variante der vorliegenden Zusammensetzung werden als Additiv jeweils eine Verbindung der allgemeinen Formel (I) und eine Verbindung der allgemeinen Formel (II) verwendet.

In einer weiteren Variante der vorliegenden Zusammensetzung können aber auch mindestens eine Verbindung der allgemeinen Formel (I) und mindestens zwei, bevorzugt mindestens drei Verbindungen der allgemeinen Formel (II) im Additiv enthalten sein. Jegliche Kombination ist hier vorstellbar.

So kann das in der vorliegenden Zusammensetzung verwendete Additiv folgende Kombinationen aufweisen:
- mindestens ein SiX¹₄, wobei der Rest X¹ Alkoxy, insbesondere Methoxy, Ethoxy, n-Propoxy oder i-Propoxy, ist, und mindestens ein R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Methyltriethoxysilan, Octyltriethoxysilan, Phenyltriethoxysilan; oder
- mindestens ein SiX¹₄, wobei der Rest X¹ Alkoxy, insbesondere Methoxy, Ethoxy, n-Propoxy oder i-Propoxy, ist, und mindestens ein R²SiX²₃ mit R² als C1-C10 Alkyl-Gruppe, bevorzugt Methyl, Ethyl, Propyl, Pentyl, Hexyl, Heptyl, Octyl, wie z.B. Methyltriethoxysilan, Octyltriethoxysilan und mindestens ein R²SiX²₃ mit R² als C6-C10-Aryl-Gruppe, bevorzugt Phenyl und mit X² als Alkoxy, insbesondere Methoxy, Ethoxy, n-Propoxy oder i-Propoxy, wie z.B., Phenyltriethoxysilan. oder
- mindestens ein SiX¹₄, wobei der Rest X¹ Alkoxy, insbesondere Methoxy, Ethoxy, n-Propoxy oder i-Propoxy, ist, und mindestens zwei R²SiX²₃ mit R² als C1-C10 Alkyl-Gruppe, bevorzugt Methyl, Ethyl, Propyl, Pentyl, Hexyl, Heptyl, Octyl, wie z.B. Methyltriethoxysilan, Octyltriethoxysilan und mindestens ein R²SiX²₃ mit R² als C6-C10-Aryl-Gruppe, bevorzugt Phenyl und mit X² als Alkoxy, insbesondere Methoxy, Ethoxy, n-Propoxy oder i-Propoxy, wie z.B., Phenyltriethoxysilan.

Des Weiteren kann in einer Variante die Zusammensetzung Tetraethoxysilan als Verbindung der Formel (I) und Methyltriethoxysilan und Phenyltriethoxysilan als Verbindungen der Formel (II) enthalten.

In einer anderen Variante die Zusammensetzung Tetraethoxysilan als Verbindung der Formel (I) und Methyltriethoxysilan , Phenyltriethoxysilan und Octyltriethoxysilan als Verbindungen der Formel (II) enthalten.

In einer weiteren Ausführungsform sind die Verbindung der allgemeinen Formel (I) in einer molaren Menge zwischen 0,08 - 0.2 mol, bevorzugt 0,1 - 0,15 mol, insbesondere bevorzugt 0,1-0,12 mol und die Verbindung der allgemeinen Formel (II) in einer molaren Menge zwischen 0,05 und 0,1 mol, bevorzugt zwischen 0,06 und 0,09 mol, besonders bevorzugt zwischen 0,07 und 0,08 mol in der Zusammensetzung enthalten.

Dabei kann sich der für die Verbindung der allgemeinen Verbindung (II) angegebene Bereich der molaren Menge sich auf eine Verbindung oder auf die Summe von zwei Verbindungen oder drei Verbindungen der allgemeinen Formel (II) beziehen

So können in der Variante der Zusammensetzung aus Tetraethoxysilan als Verbindung der Formel (I) und Methyltriethoxysilanund Phenyltriethoxysilan als Verbindungen der Formel (II) 0,15 mol Tetraethoxysilan und 0,04 mol Methyltriethoxysilan / 0,033 mol Phenyltriethoxysilan enthalten sein.

In der anderen Variante der Zusammensetzung aus Tetraethoxysilan als Verbindung der Formel (I) und Methyltriethoxysilan , Phenyltriethoxysilan und Octyltriethoxysilan als Verbindungen der Formel (II) können 0,1 mol Tetraethoxysilan und 0,03 mol Methyltriethoxysilan, / 0.025 mol Phenyltriethoxysilan und 0,043 mol Octyltriethoxysilan enthalten sein.

Das Verhältnis des Silanverbindung der Formel (I) zu den Silanverbindungen der Formel (II) liegt bevorzugt zwischen 1 : 0,5 und 1 : 2, insbesondere bevorzugt zwischen 1 : 0,75 und 1 : 1,5, ganz besonders bevorzugt zwischen 1 : 1 und 1 : 1,2.

In einer weitergehenden Ausführungsform der vorliegenden Zusammensetzung ist das mindestens eine Polymer ausgewählt aus der Gruppe enthaltend Polyurethane, Epoxidharze; Melaminharze, wie Melamin-Formaldehyd-Harz, und Polyacrylate.

Vorliegend ist die Verwendung eines Polyurethan-Polymer bevorzugt, wobei das Polyurethan-Polymer auf der Basis von aromatischen Polyisocyanaten, insbesondere Polydiphenylmethandiisocyanat (PMDI), Toluylendiisocyanat (TDI) und/oder Diphenylmethandiisocyanat (MDI) vorliegt, wobei PMDI besonders bevorzugt ist.

Das Polymer wird in das aus den Silanverbindungen gebildete Netzwerk eingebaut und verleiht der Zusammensetzung flexible Eigenschaften, die einen Auftrag erleichtern.

Die Art des verwendeten Polymers ist bevorzugt auf die verwendeten Silanverbindungen abgestimmt. So ist es von Vorteil, mit Epoxy-Gruppen modifizierte Silane zusammen mit Epoxid-Polymeren und mit Methacrylat-Gruppen modifizierte Silane zusammen mit AcrylatPolymer zu verwenden.

In einer weiteren Ausführungsform der vorliegenden Zusammensetzung ist es ebenfalls möglich mehr als ein Polymer zu verwenden.

In einer weiteren Ausführungsform beträgt der Gehalt des Polymers in der vorliegend verwendeten Zusammensetzung mindestens 30 Gew%, bevorzugt mindestens 20 Gew%, insbesondere bevorzugt mindestens 10 Gew%. In einer Ausführungsvariante beträgt das Verhältnis von Sol-Gel zu Polymer zwischen 1 : 0,1 und 1 : 0,5, bevorzugt zwischen 1 : 0,2 und 1 : 0,4 (bezogen auf die Feststoffe).

Der Lösemittelgehalt, der im Wesentlichen durch die Verwendung der Silane bedingt ist, liegt zwischen 1 bis 15 Gew%, bevorzugt 2 bis 13 Gew%, insbesondere bevorzugt zwischen 4 bis 10 Gew%. Bei diesen Angaben ist der Lösemittelgehalt aus dem eingesetzten Polymer jedoch zunächst nicht berücksichtigt Lösemittel sind insbesondere Wasser und/oder Alkohole, hier bevorzugt Ethanol. Der Alkoholanteil kann z.B. bei < 1 % liegen. Auch ist es möglich, dass die vorliegende Zusammensetzung ausschließlich Alkohol und wenig oder kein Wasser enthält, d.h. die Silanverbindungen und auch die Polymerdispersion können in einer alkoholischen Form verwendet werden.

In einer weiteren Ausführungsform kann die vorliegende Zusammensetzung anorganische Partikel, insbesondere SiO₂-, Al₂O₃-, ZrO₂ -, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

So kann das in der vorliegenden Zusammensetzung verwendete Additiv folgende Kombinationen aufweisen:
- mindestens ein SiX¹₄, wobei der Rest X¹ Alkoxy, insbesondere Methoxy, Ethoxy, n-Propoxy oder i-Propoxy, ist, und mindestens ein R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Methyltriethoxysilan Octyltriethoxysilan, Phenyltriethoxysilan Polyurethan und optional SiOz-Partikel; oder
- mindestens ein SiX¹₄, wobei der Rest X¹ Alkoxy, insbesondere Methoxy, Ethoxy, n-Propoxy oder i-Propoxy, ist, und mindestens ein R²SiX²₃ mit R² als C1-C10 Alkyl-Gruppe, bevorzugt Methyl, Ethyl, Propyl, Pentyl, Hexyl, Heptyl, Octyl, wie z.B. Methyltriethoxysilan, Octyltriethoxysilan und mindestens ein R²SiX²₃ mit R² als C6-C10-Aryl-Gruppe, bevorzugt Phenyl und mit X² als Alkoxy, insbesondere Methoxy, Ethoxy, n-Propoxy oder i-Propoxy, wie z.B., Phenyltriethoxysilan, Polyurethan und optional SiO₂-Partikel, oder
- mindestens ein SiX¹₄, wobei der Rest X¹ Alkoxy, insbesondere Methoxy, Ethoxy, n-Propoxy oder i-Propoxy, ist, und mindestens zwei R²SiX²₃ mit R² als C1-C10 Alkyl-Gruppe, bevorzugt Methyl, Ethyl, Propyl, Pentyl, Hexyl, Heptyl, Octyl, wie z.B. Methyltriethoxysilan, Octyltriethoxysilan und mindestens ein R²SiX²₃ mit R² als C6-C10-Aryl-Gruppe, bevorzugt Phenyl und mit X² als Alkoxy, insbesondere Methoxy, Ethoxy, n-Propoxy oder i-Propoxy, wie z.B., Phenyltriethoxysilan, Polyurethan und optional SiO₂-Partikel.

Eine besonders bevorzugte Variante der vorliegenden Zusammensetzung umfasst Tetraethoxysilan, Methyltriethoxysilan, Phenyltriethoxysilan, Octyltriethoxysilan und Polyurethann und optional SiO₂-Partikel.Eine ganz besondere bevorzugte Variante der vorliegenden Zusammensetzung umfasst Tetraethoxysilan, Methyltriethoxysilan, Phenyltriethoxysilan, Octyltriethoxysilan, Polyurethan und SiOz Partikel.

In einer weiteren Ausführungsform enthält die vorliegende Zusammensetzung mindestens ein Tensid. Das Tensid bewirkt eine Herabsetzung der Oberflächenspannung der bevorzugt wässrigen Zusammensetzung und unterstützt die Bildung von Dispersionen mit dem Quellungsmittel bzw. wirkt als Lösungsvermittler.

Mögliche Tenside sind anionische Tenside und kationische Tenside basierend auf quartären Ammoniumverbindungen.

Als anionische Tenside können Alkylcarboxylate Alkylbenzolsulfonate, bevorzugt Natriumdodecylbenzolsulfonat, sekundäre Alkylsulfonate, Fettalkoholsulfate, wie Natriumlaurylsulfat, oder Alkylethersulfate. Wie Natriumdodecylpoly(oxyethylen)sulfat, verwendet werden. Bevorzugt wird Natriumdodecylbenzolsulfonat verwendet.

Die Menge des zugegebenen Tensids beträgt zwischen 0, 1 und 0,2 Gew%, bevorzugt zwischen 0,12 und 0,15 Gew% bezogen auf das Additiv aus Silan und Polymer.

Die beschriebene Zusammensetzung umfassend mindestens ein Quellungsmittel, mindestens ein Additiv aus mindestens zwei Silanen und einem Polymer (wie oben beschrieben) und optional mindestens ein Tensid wird bevorzugt zur Beschichtung und Versiegelung von Profilen, dem oberen Bereichen einer Fügekante und/oder optional für Fasen (für V-Fugen) verwendet.

In einer weiteren Ausführungsform wird zu der vorliegenden Zusammensetzung mindestens ein Fasenfarbsystem zugegeben. Das Fasenfarbsystem umfasst Farbpigmente und ein wässriges Lösungsmittel oder Suspensionsmittel. Als Farbpigmente kommen Russ, Eisenoxide, Titandioxid und/oder organische Pigmente zum Einsatz. Geeignete Löse- oder Suspensionsmittel sind Melamin-Harz-Formaldehyd-Harze oder Acrylate. In einer Ausführungsform umfasst die Fasenfarbe Farbpigment, Acrylat und Wasser.

Entsprechend wird somit ebenfalls ein Beschichtungssystem umfassend mindestens ein Quellungsmittel, mindestens ein Additiv aus mindestens zwei Silanen und einem Polymer wie oben beschrieben, optional mindestens ein Tensid, mindestens eine Fasenfarbe und ein Suspensionsmittel, bevorzugt ein wässriges Acrylat, bereitgestellt. Dieses Beschichtungssystem wird bevorzugt zur Beschichtung und Versiegelung von Fügekanten und/oder Fasen (für V-Fugen) verwendet.

Die vorliegende Zusammensetzung ist gemäß einer ersten Ausführungsform in einem Verfahren umfassend die folgenden Schritte herstellbar:
- Bereitstellen von mindestens einer Dispersion A) umfassend Polymerdispersion und optional eine Dispersion von anorganischen Partikeln,
- Bereitstellen einer Lösung B) umfassend eine Mischung von mindestens einer Verbindung der allgemeinen Formel mindestens einer Verbindung der allgemeinen Formel (II) und mindestens einem Katalysator, insbesondere einer Säure,
- Zugabe der Lösung B) zu der Dispersion A) und Neutralisation der additiven Mischung (z.B. durch Zugabe einer basischen Verbindung);
- Abtrennen der wässrigen Phase des Additivs aus Polymerdispersion, mindestens einer Verbindung der Formel (I) und mindestens einer Verbindung der Formel (II), und
- optionale Zugabe von mindestens einem Tensid zu der wässrigen Additiv-Phase,
- Zugabe von mindestes Quellungsmittels zu der wässrigen Additiv-Phase,
- Optional Zugabe von mindestens einem Fasenfarbensystem.

Als Katalysator geeignete anorganische und/oder organische Säuren sind ausgewählt aus einer Gruppe enthaltend Phosphor-, Essig-, *p*-Toluolsulfon-, Salz-, Ameisen- oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak oder NaOH zugegeben. Dies führt zu einer Separation der wässrigen Phase mit dem Binderanteil von der alkoholischen Phase (ethanolischen Phase). Die wässrige Phase kann anschließend leicht von der alkoholischen Phase abgetrennt werden.

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% verwendet.

Die Zugabe des mindestens Tensids ermöglicht eine bessere Suspension des anschließend beigefügten Quellungsmittels, wie oben beschrieben.

In Abhängigkeit vom zugegebenen Quellungsmittels kommt es zu einer Zunahme der Viskosität. Die Viskositätszunahme wird von dem verwendeten Quellungsmittel beeinflusst und kann bis zu einer unerwünschten Gelbildung führen, wodurch eine weitere Verwendung der Zusammensetzung beeinflusst wird.

Die Viskosität der vorliegenden Zusammensetzung wird über die Auslaufzeit unter Verwendung eines Auslaufbechers gemäß EN ISO 2431:2011 (Beschichtungsstoffe - Bestimmung der Auslaufzeit mit Auslaufbechern, 4 mm Düse, 21°C) bestimmt.

Die Auslaufzeit einer mindestens ein Tensid enthaltenen Zusammensetzung beträgt zwischen 10 und 60 Sekunden, bevorzugt zwischen 12 und 40 Sekunden, bevorzugter zwischen 15 und 30 Sekunden. Ohne Tensid liegt die Auslaufzeit der Zusammensetzung bei mehr als 60 Sekunden.

Bei Verwendung von Xanthan als Quellungsmittel hat es sich z.B. als vorteilhaft erwiesen, zunächst eine wässrige Xanthan-Lösung mit mindestens einem Silan der allgemeinen Formel R²SiX²₃ mit R² als C1-C10 Alkyl-Gruppe, bevorzugt Methyl, Ethyl, Propyl, Pentyl, Hexyl, Heptyl, Octyl, und mit X² als Alkoxy, insbesondere Methoxy, Ethoxy, n-Propoxy oder i-Propoxy, wie z.B. Methyltriethoxysilan bereitzustellen. Die Zugabe des Silans verhindert eine Gelbildung des Xanthans.

In einem weiteren Schritt kann die Zusammensetzung umfassend mindestens ein Quellungsmittel, mindestens ein Additiv aus mindestens zwei Silanen und einem Polymer (wie oben beschrieben) und optional mindestens ein Tensid zu einem Fasenfarbsystem (aus Fasenfarbe und Suspensionsmittel) zugegeben werden. Die dem Fasenfarbsystem zugegebene Menge kann bis zu 20 Gew%, bevorzugt bis zu 30 Gew%, besonders bevorzugt bis zu 40 Gew%, noch mehr bevorzugt bis zu 50Gew% betragen.

Wie bereits oben erwähnt, kann die vorliegende Zusammensetzung zur Beschichtung bzw. Versiegelung von Fügekanten, Profilen und/oder Fasen von Holzwerkstoffplatten, insbesondere WPC, Spanplatte, HDF oder MDF-Platten, verwendet werden.

Die Aufgabe der vorliegenden Erfindung wird ebenfalls durch eine Holzwerkstoffplatte mit der vorliegenden Zusammensetzung gelöst.

Entsprechend umfasst mindestens eine Holzwerkstoffplatte, wie z.B. HDF- oder MDF- oder Spanplatte, mindestens eine erfindungsgemäße Zusammensetzung, mit der insbesondere die Fügekanten, Profile und/oder Fasen der Holzwerkstoffplatte zum Zwecke der Versiegelung beschichtet sind.

Die Zusammensetzung kann auf die Fügekanten, Profile und/oder Fasen der Holzwerkstoffplatte z.B. mittels Sprühen, Walzen oder unter Verwendung eines Vakuumaten aufgetragen werden.

Die Schichtdicke der Zusammensetzung auf der Plattenkante und/oder -fase kann in einem Bereich zwischen 10 und 50 µm, bevorzugt zwischen 20 und 40 µm liegen.

Die Zusammensetzung kann im Flüssigauftrag mit einer Menge zwischen 100 und 200 Silan fl. g/m², bevorzugt zwischen 120 und 150 Silan fl. g/m² auf die Plattenkanten und/oder Fasen aufgebracht werden. Dies ergibt einen Feststoffanteil auf der Plattenkante zwischen 5 und 25 mg/cm², bevorzugt zwischen 10 und 20 mg/cm².

Holzwerkstoffplatten, wie Holzspan- und Holzfaserplatten wie z.B. MDF-, HDF-Platten, werden aus Holzspänen oder Holzfasern hergestellt, die durch Zerspanung der Holzhackschnitzel in einem Zerspaner oder ein Zerfaserungsprozess der Holzhackschnitzel in einem Refiner gewonnen werden. Die mit in Holzfaserplatten verwendeten Holzfasern weisen eine Länge zwischen 1,5 mm und 20 mm und eine Dicke zwischen 0,05 mm und 1 mm auf. Die Größe von in Holzspanplatten verwendeten Holzspänen ist abhängig davon, ob sie in der Deck- oder Mittelschicht eingesetzt werden. In der Mittelschicht beginnen die Späne bei > 0,125 mm Siebweite, in der Deckschicht bei > 0,8 - 1,0 mm.

Die vorliegenden Holzwerkstoffplatten können verschiedene Bindemittelsysteme aufweisen, die als Bindemittel mit den Holzfasern vermischt und verpresst werden. Bevorzugte Bindemittelsysteme sind: Formaldehyd-Harze, wie Harnstoff-Formaldehyd-Harze, Melamin-Formaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

Die vorliegenden Holzwerkstoffplatten können auch eine Beschichtung auf der Plattenoberseite mit Folien, z.B. Folien aus thermoplastischen Materialien wie PVC oder PP, oder Papierimprägnate, wie z.B. Imprägnate aus Dekorpapierlagen oder Overlaypapieren aufweisen. Overlay-, Dekor-, Gegenzug- und Kraftpapierimprägnate basieren auf dünnen Papierlagen, die mit einem Harz, bevorzugt Melamin-Formaldehyd-Harz vollständig oder teilweise durchtränkt (imprägniert) sind.

Imprägnierungen können z.B. in einem Imprägnierbad, durch Walzen, durch Rasterwalzen, durch Aufrakeln oder auch durch Besprühen aufgebracht werden. In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 60 Gew% imprägniert. Nach dem Durchlauf einer Atemstrecke erfolgt eine Tauchimpägnierung mit einem Harz. In einem Rakelsystem / Quetschwalzenpaar wird überschüssiges Harz entfernt, und optional werden (im Falle einer Overlaypapierlage) abriebfeste Partikel auf die imprägnierte Papierlage gestreut. Es erfolgt ein Trocknungsschritt auf eine Restfeuchte von ca. 6%.

Im Falle von beschichteten Holzwerkstoffplatten werden diese Papiere- (Dekor-, Overlay-) auf die Holzwerkstoffplatten aufgelegt und verpresst. Typischerweise wird zunächst das imprägnierte Dekorpapier auf die Oberseite der Holzwerkstoffplatte aufgebracht. Auf das Dekorimprägnat folgt anschließend mindestens ein Overlayimprägnat. Das Gegenzugimprägnat wird unterseitig mit der Holzwerkstoffplatte verpresst. Ein typischer Aufbau einer beschichteten HDF-Platte ist von oben nach unten: Overlayimprägnat, Dekorimprägnat, HDF Träger, Gegenzugimprägnat.

In einer Ausführungsform ist es ebenfalls vorgesehen, ein Furnier auf einer Holzwerkstoffplatte aufzubringen. Derartige Furniere weisen typischerweise eine Oberflächenvergütung aus einer Lackierung auf Basis von UV- oder ESH-Lacken auf.

Die Furniere werden auf der Holzwerkstoffplatte (HDF, Spanplatte, OSB usw.) aufgeleimt. Zur Verklebung der Furniere auf dem Träger werden meist Harnstoff- oder PVAc-Leime mit und ohne Härter eingesetzt.

Es ist auch möglich, das Furnier in einer Kurztaktpresse mit Hilfe eines mit Melaminharz imprägnierten Papiers (z. B. ein Overlay) auf die Holzwerkstoffplatte aufzupressen. Die Pressparameter liegen dabei bei ca. T > 150°C, p > 30 bar und t > 30 sec. Mit dieser Technologie lassen sich ebenfalls Furnierfussböden mit Furnieren herstellen, die eine Stärke von ca. 0,5 mm besitzen. Von entscheidender Bedeutung ist dabei, dass auch hier beim Presssvorgang das Melaminharz möglichst weit in das Furnier aufsteigt. Dadurch erfolgt zum einen eine Armierung des Furniers mit dem Kunstharz und zum anderen wird das durch die Verpressung komprimierte Furnier in dem Zustand fixiert. Allerdings sollte das Melaminharz nicht aus dem Furnier austreten, da dies zu Verfärbungen in der Oberfläche und zu Haftungsproblemen beim anschließenden Lackieren oder Ölen führt.

In einer bevorzugten Ausführungsform wird eine mit einem Furnier verpresste Spanplatte verwendet. Hierzu wird in einem ersten Schritt ein harzgetränktes Papier (bevorzugt ein harzimprägniertes Kraftpapier) mit einem Furnier auf eine Spanplatte (z.B. auf die Oberseite) aufgelegt und verpresst. In einer weitergehenden Variante werden als Gegenzug ein harzgetränktes Papier und/oder ein Furnier verwendet.

Es ist auch möglich, dass die Holzwerkstoffplatte mit flüssigen Harzschichten beschichtet (Flüssigbeschichtung) und verpresst wird. Dabei wird auf der Holzwerkstoffplatte zunächst eine Grundierungsschicht gefolgt von einer Primerschicht angeordnet, die dann unter Ausbildung einer Dekorschicht bedruckt wird. Auf die Dekorschicht werden anschließend weitere Harzschichten als Schutz- und Verschleißschichten aufgebracht. Die Holzwerkstoffplatte kann entsprechend mindestens eine Dekorschicht auf der Oberseite und einen mehrschichtigen Harzaufbau enthaltend abriebfeste Partikel, Zellulosefasern und Glaskugeln aufweisen. Folgender Schichtaufbau ist möglich (von unten nach oben gesehen): Gegenzug aus sechs Harzschichten - Holzwerkstoffplatte - Grundierungsschicht - Druckdekorschicht - Schutzschicht, insbesondere eine Schutzschicht aus einem noch nicht vollständig ausgehärtetem Harz - erste Harzschicht mit Zellulosefasern - Schicht aus abriebfesten Partikeln - zweite Harzschicht - dritte Harzschicht mit Glaskugeln- vierte Harzschicht mit Glaskugeln - fünfte Harzschicht mit Glaskugeln - sechste Harzschicht (ohne Glaskugeln). Die Schutzschicht dient der Abdeckung des Dekors und des Schutzes des Dekors während der Zwischenlagerung (Stapelung, Lagerung, Transport). Die weiteren Harzschichten auf der Oberseite bilden in Summe ein Overlay, das das fertige Laminat gegen Abrieb schützt und eine dekorsynchrone Strukturierung ermöglicht.

Im Falle von der Verwendung der beschriebenen Holzwerkstoffplatten als Fußbodenpaneele werden die Holzwerkstoffplatten mit einer Feder-Nut-Verriegelung versehen und zum schwimmenden Verlegen verwendet. Ein entsprechendes Verlegeverfahren umfasst dabei das Verlegen eines ersten Fußbodenpaneels, und Anfügen eines zweiten Fußbodenpaneels an das erste Fußbodenpaneel, wobei die Feder des zweiten Fußbodenpaneels in die Nut des ersten Fußbodenpaneels eingefügt wird.

Die mit Fasen versehenen Fußbodenpaneele bilden nach dem Verlegen V-Fugen, die durch die aufgetragene Zusammensetzung aus Fasenfarbe und Additiv versiegelt und vor dem Eindringen von Feuchtigkeit geschützt sind.

Die Erfindung wird nachfolgend unter Bezugnahme an Ausführungsbeispielen näher erläutert.

### Ausführungsbeispiel 1: Herstellung einer Versiegelungszusammensetzung gemäß einer ersten Ausführungsform

Es werden 28,8 g einer wässrigen SiOz Dispersion (Köstrosol 3550) und 20 g einer wässrigen Polyurethanlösung Alberdingk U 3215 vorgelegt.

Parallel werden 12,3g Ocytltriethoxysilan, 2,4g Methyltriethoxysilan / Triethoxy(methyl)silan oder , 6,1g Phenyltriethoxysilan, 20,8g Tetraethoxysilan und 28,8 g Wasser auf 50 °C erhitzt und gerührt, unter Rühren wird nun 2,8 g Schwefelsäure und für 120 Minuten gerührt. Anschließend wir diese Lösung im warmen Zustand in obiger Suspension eingerührt und bei Raumtemperatur weitere 60 Minuten gerührt. Es erfolgt eine Zugabe ein 0,1 molaren NaOH Lösung bis ein pH-Wert von 7,5 erreicht wird.

Nach 24 Stunden Standzeit wird die alkoholische Phase über einen Scheidetrichter abgetrennt. Anschließend wird noch 0,13 g des Tensids Natriumdodecylbenzolsulfonat hinzugegeben.

Zu dieser Lösung wird nun ein Quellungsmittel hinzugegeben, das wie folgt hergestellt wird:
10 g Xanthan wird in 100 g demineralisiertem Wasser gelöst, nach 30 Minuten wird die Lösung auf 80 °C erwärmt und es werden 0,78 g Methyltriethoxysilan hinzugeben und für weitere 60 Minuten gerührt.
Zu 100 g der obigen Lösung werden nun 20,1 g der wässrigen Xanthan Lösung hinzugegeben. Gibt man reines Xanthan in dieser Konzentration hinzu, dickt die Lösung stark an und es kommt zur Gelbildung.

Das Additiv (ino^{®}sil AS-II) kann nun bis zu 50 Gew. % zu einem handelsüblichen Kantenbeschichtungssystem hinzugegeben werden, welches über mehrere Wochen stabil bleibt. Die Aushärtung nach Auftrag erfolgt thermisch (Bsp. 100 °C, 5 Minuten).

### Ausführungsbeispiel 2: Herstellung einer Versiegelungszusammensetzung gemäß einer zweiten Ausführungsform

Es werden 28,8 g einer wässrigen SiO₂ Dispersion (Köstrosol 3550) und 20 g einer wässrigen Polyurethanlösung Alberdingk U 3215 vorgelegt.

Parallel werden 12,3g Ocytltriethoxysilan, 2,4g Methyltriethoxysilan, 6,1g Phenyltriethoxysilan, 20,8g Tetraethoxysilan und 28,8 g Wasser auf 50 °C erhitzt und gerührt, unter Rühren wird nun 2,8 g Schwefelsäure und für 120 Minuten gerührt. Anschließend wir diese Lösung im warmen Zustand in obiger Suspension eingerührt und bei Raumtemperatur weitere 60 Minuten gerührt. Es erfolgt eine Zugabe ein 0,1 molaren NaOH-Lösung bis ein pH-Wert von 7,5 erreicht wird.

Nach 24 Stunden Standzeit wird die alkoholische Phase über einen Scheidetrichter abgetrennt. Anschließend wird noch 0,13 g des Tensids Natriumdodecylbenzolsulfonat hinzugegeben.

Zu 100 g der obigen Lösung werden 1,5 g Ethylcellulose als Quellungsmittel hinzugegeben. Es kommt nun zu einer geringen Viskositätssteigerung.

Das Additiv (ino^{®} sil AS-I) kann nun bis zu 50 Gew. % zu einem handelsüblichen Kantenbeschichtungssystem hinzugegeben werden, welches über mehrere Wochen stabil bleibt. Die Aushärtung nach Auftrag erfolgt thermisch (Bsp. 100 °C, 5 Minuten).

### Ausführungsbeispiel 3: Herstellung einer Versiegelungszusammensetzung gemäß einer dritten Ausführungsform

Es werden 28,8 g einer wässrigen SiOz Dispersion (Köstrosol 3550) und 20 g einer wässrigen Polyurethanlösung Alberdingk U 3215 vorgelegt.

Parallel werden 12,3g Ocytltriethoxysilan, 2,4g Methyltriethoxysilan, 6,1g Phenyltriethoxysilan, 20,8g Tetraethoxysilan und 28,8 g Wasser auf 50 °C erhitzt und gerührt, unter Rühren wird nun 2,8 g Schwefelsäure und für 120 Minuten gerührt. Anschließend wir diese Lösung im warmen Zustand in obiger Suspension eingerührt und bei Raumtemperatur weitere 60 Minuten gerührt. Es erfolgt eine Zugabe ein 0,1 molaren NaOH Lösung bis ein pH-Wert von 7,5 erreicht wird.

Nach 24 Stunden Standzeit wird die alkoholische Phase über einen Scheidetrichter abgetrennt. Anschließend wird noch 0,13 g des Tensids Natriumdodecylbenzolsulfonat hinzugegeben.

Zu 100 g der obigen Lösung werden 0,8 g eines Superabsorbers auf Polyacrylbasis als Quellungsmittel hinzugegeben. Es kommt nun schon bei geringer Dosierung zu einer deutlichen Anhebung der Viskosität.

Das Additiv (ino^{®} sil AS-III) kann nun bis zu 50 Gew. % zu einem handelsüblichen Kantenbeschichtungssystem hinzugegeben werden, welches über mehrere Wochen stabil bleibt. Die Aushärtung nach Auftrag erfolgt thermisch (Bsp. 100 °C, 5 Minuten).

## Patentansprüche

1. Zusammensetzung zur Versiegelung und Beschichtung von Kanten und/oder Fasen von Holzwerkstoffplatten umfassend
a) Mindestens ein Quellungsmittel, und
b) Mindestens ein Additiv aus
- mindestens einer Verbindung der allgemeinen Formel (I)
**R¹ₐSiX¹₍₄₋ₐ₎** **(I),**
wobei
- X¹ Alkoxy-, Aryloxy-, Acyloxy- ist, und
- R¹ ein organischer Rest ist ausgewählt aus der Gruppe umfassend Alkyl, Aryl, Cycloalkyl, die durch -O- oder -NH- unterbrochen sein können, und
- wobei R¹ mindestens eine funktionelle Gruppe Q₁ aufweist, die ausgewählt ist aus einer Gruppe enthaltend eine Acryl-, Acryloxy-, Methacryl-, Methacryloxy-, Cyano-, Isocyano- und Epoxid- Gruppe, und
- a = 0, 1, 2, 3, insbesondere 0 oder 1 ist,
- mindestens einer Verbindung der allgemeinen Formel (II)
**R²_{b}SiX²_{(4-b)}** **(II),**
wobei
- X² Alkoxy-, Aryloxy-, Acyloxy ist,
- R² ein nicht-hydrolysierbarer organischer Rest R² ist ausgewählt aus der Gruppe umfassend Alkyl und Aryl, und
- b = 1, 2, 3, oder 4 ist, und
- mindestens einer wässrigen Polymerdispersion.

2. Zusammensetzung nach einem der vorhergehenden Ansprüche, **dadurch gekennzeichnet, dass** das mindestens eine Quellungsmittel ein quellfähiges Polymer ausgewählt aus der Gruppe enthaltend Polysaccharide, bevorzugt Xanthane, Stärke, Cellulose, mod. Cellulose, Pektine, Protein, bevorzugt Gelantine.

3. Zusammensetzung nach einem der Ansprüche 1-2, **dadurch gekennzeichnet, dass** das mindestens eine Quellungsmittel ein quellfähiges synthetisches Polymer ausgewählt aus der Gruppe enthaltend Polyacrylate, Schichtsilikate, wie Bentonit, Silicagel.

4. Zusammensetzung nach einem der vorhergehenden Ansprüche, **dadurch gekennzeichnet, dass** der Anteil des mindestens einen Quellungsmittel zwischen 0,3-5 Gew%.bezogen auf das Additiv beträgt.

5. Zusammensetzung nach einem der vorhergehenden Ansprüche, **dadurch gekennzeichnet, dass** mindestens ein Tensid enthalten ist.

6. Zusammensetzung nach einem der vorhergehenden Ansprüche, **dadurch gekennzeichnet, dass** mindestens eine Fasenfarbsystem zugegeben wird.

7. Zusammensetzung nach einem der vorhergehenden Ansprüche, **dadurch gekennzeichnet, dass** mindestens eine Verbindung der allgemeinen Formel (I) und mindestens zwei, bevorzugt mindestens drei Verbindungen der allgemeinen Formel (II) enthalten sind.

8. Zusammensetzung nach einem der vorhergehenden Ansprüche, **dadurch gekennzeichnet, dass** X¹ ausgewählt ist aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, und X² ausgewählt ist aus einer Gruppe enthaltend H, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,

9. Zusammensetzung nach einem der vorhergehenden Ansprüche, **dadurch gekennzeichnet, dass** die Verbindung der allgemeinen Formel (I) der Formel **SiX¹₄,** insbesondere mit X¹ Alkoxy, insbesondere Methoxy, Ethoxy, n-Propoxy oder i-Propoxy, entspricht.

10. Zusammensetzung nach einem der vorhergehenden Ansprüche, **dadurch gekennzeichnet, dass** der nicht-hydroliserbare organische R² ausgewählt ist aus einer Gruppe umfassend C₁-C₁₅-Alkyl, insbesondere C₁-C₁₀-Alkyl, und C₆-C₁₀-Aryl, bevorzugt Methyl, Ethyl, n-Propyl, Isopropyl, n-Butyl, s-Butyl, t-Butyl, Pentyl, Hexyl, Heptyl, Octyl, Nonyl, Cyclohexyl, Phenyl und Naphthyl.

11. Zusammensetzung nach einem der vorhergehenden Ansprüche, **dadurch gekennzeichnet, dass** die Verbindung der Formel (II) eine der folgenden Formeln umfasst:
- R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy.

12. Zusammensetzung nach einem der vorhergehenden Ansprüche, **dadurch gekennzeichnet, dass** das mindestens eine Polymer der Polymerdispersion ausgewählt ist aus der Gruppe enthaltend Polyurethane, insbesondere Polydiphenylmethandiisocyanat (PMDI), Epoxidharze, Melaminharze, Polyacrylate.

13. Zusammensetzung nach einem der vorhergehenden Ansprüche, **dadurch gekennzeichnet, dass** anorganische Partikel, insbesondere SiO₂-, Al₂O₃-, ZrOz-, TiOz-Partikel, enthalten sein können.

14. Verfahren zur Herstellung einer Zusammensetzung nach einem der vorhergehenden Ansprüche umfassend die folgenden Schritte:
- Bereitstellen von mindestens einer Dispersion A) umfassend Polymerdispersion und optional eine Dispersion von anorganischen Partikeln,
- Bereitstellen einer Lösung B) umfassend eine Mischung von mindestens einer Verbindung der allgemeinen Formel mindestens einer Verbindung der allgemeinen Formel (II) und mindestens einem Katalysator, insbesondere einer Säure,
- Zugabe der Lösung B) zu der Dispersion A) und Neutralisation der additiven Mischung (Zugabe einer basischen Verbindung);
- Abtrennen der wässrigen Phase des Additivs aus Polymerdispersion, mindestens einer Verbindung der Formel (I) und mindestens einer Verbindung der Formel (II), und
- Zugabe von mindestes Quellungsmittels zu der wässrigen Additiv-Phase,
- Optional Zugabe von mindestens einem Fasenfarbensystem.

15. Holzwerkstoffplatte umfassend mindestens eine auf eine Kante und/oder Fase aufgebrachte Zusammensetzung nach einem der Ansprüche 1 bis 13.
